# EUROPEAN PATENT APPLICATION

(11) **EP 2 322 333 A1**
(43) Date of publication of application: **18.05.2011**
(21) Application number: 09176013.2
(22) Date of filing: 16.11.2009
(51) Int. Cl.: B29B 17/00, B29B 7/28

(54) **Mixed plastic waste processing apparatus, method of producing a hybrid plastic material, and hybrid plastic material obtained by blending.**

(71) Applicant: Bami Intelligence S.A., 1204 Geneva (CH)
(72) Inventor: Mot, Jacques, 6300 Zug (CH)
(74) Representative: Pautex Schneider, Nicole Véronique

(57) **Abstract**

The invention relates to an apparatus and method for recycling thermoplastic waste of principally immiscible plastic materials.

The blending apparatus (B) comprises in a cylindrical blending chamber (BC) a rotating shaft (120) from which extend radially stirring blades (121). Waste material which is charged into the blending chamber is subjected to rapid rotation of the shaft (120), so that the material is friction-heated in short time. The blending chamber walls include cooling channels (132) to cool the hot mass under treatment simultaneously with the friction-heating in order to regulate the temperature to a range, where intensive shearing of the plastic domains corresponding to the granulates of the initial waste is possible in order to obtain a very intimate mixture, whereas the temperature is kept beneath a value where substantial degradation of the plastic sets in.

## Description

### Background of the Invention

The present invention relates to a plastic waste blending apparatus according to the preamble of claim 1, to a method of producing a hybrid plastic material and to the hybrid plastic material per se.

The usefulness and even the need of mechanically recycling waste plastic material does not need to be emphasized anymore today, and has basically three primary reasons, one being the shortage, and thus the cost of virgin materials, secondly the problem of discharging the waste and thirdly the reduction of CO2 emission.

All these aspects are simultaneously served by mechanical recycling.

The present invention deals with mechanically recycling of mixed plastic waste materials, in particular, thermoplastic materials.

The applicant is owner of US patent no. 6,107,400 disclosing a new concept for recycling these types of materials, by thoroughly mixing chips of a mixture of immiscible plastic waste particles, at a rotational speed of the mixing blades, sufficiently high to friction-heat the material to melt instantly.

The energy needed to drive the mixer is relatively low while the granulate material is dry, and immediately rises to higher values, as soon as the melting process starts.

Thermoplastic materials may be recycled several times, typically up to six times, depending on the time period, during which the recycled material is kept above melting temperature at each recycling operation, because the degradation effect, produced thereby, is cumulative, and after a number of cycles the material is too degraded to allow a further recycling operation.

Additives may be added to each input material, called a stabilizing package, which may give the hybrid new live.

Therefore, without wishing to be bound by theory, one would think, that the time period of maximum temperature should simply be kept as short as possible. The present inventors, however, believe, by observing the process, that exposure to temperature of the blend above its melting point is not neccesarely the issue, however combined with TIME this is critical. Creating extreme sudden high temperature by friction seems to be acceptible (and neccesary), however this should occur suddenly (instantly) and should be stopped as fast as possible, ideally the temperature should be reduced instantey to normal processing temperature. (i.e. input at 50 C, Gspot at X C 1 second, reduce and keep temperature by injecting liquid nitrogen while temperature is being read by IR and keep temperature at normal processing temperature and increase speed to maximize homogeinisation)

However, in order to create a blended or hybrid recycled plastic material of optimized quality, specifically in terms of mechanical properties and various other properties, the duration of blending just around or slightly above melting temperature must be continued for at least a minimum period, in order to allow sufficient shearing of the particles, to result in as small as possible sizes of microscopic regions of homogeneous domains corresponding to broken down parts of the initial granular particles.

### Objective of the Invention

These two requirements oppose each other, and until today, the termination of the blending process is more or less based on the personal experience of the researchers and in combination with quality control of the blends during processing.

It is therefore the object of the present invention, to create an automatic system, which is capable to individually optimize the quality of the produced hybrid material and at the same time conserve the possibility for an increased number of recycling processes.

### Summary of the Invention

The inventors of the present application have discovered, that this objective, to simultaneously optimize each of the two above identified aspects, without trading in one for the other, can be obtained by a blending machine of the type as outlined above, which further comprises the particular fatures of the characterizing clause of claim 1.

In more detail, the inventors have discovered, that by simultaneously using the heating effect of the fast rotating blending blades together with cooling the materials that are thus mixed and heated, it is possible, depending on the individual nature of the mixture of waste plastic materials, to control the heating ramp of the material as well as the end temperature in a way, that the duration of shearing can be made suffuciently long in order to reach the desired quality of the hybrid materials in terms of the above mentioned mechanical parameters, and simultaneously minimize (or eliminate) the degradation effects for the plastic materials due to long exposure to excessive temperatures.

This control of the heating ramp and/or the end temperature is obtained through cooling of the material by cooling the walls of the blending chamber and/or the blending blades, as well as by injecting cooling fluid directly into the hot blended material, or both.

In a particular embodiment of the invention, the rotary waste plastic blending machine comprises at least one injection device for a cooling fluid, capable of injecting cooling fluid into said blending chamber during rotation of said rotor shaft whereby said control means are capable of regulating at least one of amount, duration, frequency and fluid pressure of the injected cooling fluid.

Typically, the injected cooling fluid is a cooled inert gas, such as liquid nitrogen, but other cooling fluids are possible.

In a particularly advantageous embodiment of the invention, the control means is capable to regulate the cooling by means of said cooling channels and/or by means of injection of a cooling fluid into said blending chamber such, that the temperature of the charged waste plastic material is kept at or beneath a desired value, whereby this desired value may be empirically established.

According to one embodiment of the invention, the blending chamber has substantially cylindrical shape, the rotor shaft is arranged within said cylindrical blending chamber in coaxial configuration, and the cooling channels comprise cylindrical borings, which are arranged in parallel relationship with said shaft within walls of the cylindrical blending chamber.

In order to enhance the cooling effect of the cooling fluid circulating within the cooling channels, turbulence-creating objects may be located within said cylindrical borings.

The above proposed blending apparatus carries out a method of producing a hybrid plastic material by blending together at least two immiscible thermoplastic waste plastic materials, comprising the steps of:
(a) mixing and heating granulated thermoplastic waste plastic material of at least two different types in a rotary blending machine provided with rotary stirring blades up to melting temperature,
(b) controlling the temperature and/or the temperature ramp of the granulated thermoplastic material during mixing and friction-heating in order to control its temperature to be kept at a value below a predetermined value, while permitting to continue or increase shearing of particles of the thermoplastic waste material for a desired period of time or at a desired speed.

The temperature control may be carried out by controlling the amount and/or temperature of cooling fluid, injected into said cooling channels and directly injected into the blending chamber.

The described method may be empirically refined in order to optimize the physical properties of the resulting hybrid plastic material, by performing the following steps:
(c) carrying out steps (a) and (b) of the method described further above,
(d) discharging the thus processed material to form samples of the hybrid plastic material,
(e) measuring the desired physical property of the sample material,
(f) changing the predetermined value of the temperature and/or of the mixing duration of the waste plastic material charged into the blending chamber,
(g) repeating steps (c) to (f) until optimal values for temperature and mixing duration have been determined resulting in desired parameters of the produced hybrid plastic material, and
(h) continuing to carry out the method of steps (a) and (b) on the basis of the optimized values determined in step (g).

The invention further relates to a recycled hybrid plastic material, produced by blending at least two kinds of immiscible thermoplastic materials in a blending apparatus as described above, which hybrid material comprises an intimate mixture of microscopic regions of the initial waste materials, said microscopic regions having a size approaching the molecular size of the individual recycled materials.

This type of recycled hybrid material can be obtained with the use of the blending apparatus as described above, respectively with the method as described above.

The recycled hybrid plastic material (which is a compound and the mechanical and other properties can be custom altered with modifying components within the same blending process) as described hereinabove may be used for the production of General Purpose and special purpose injection, blow molding as well as extrusion applications. Such as injection molding of transport pallets, crates, waste containers, automotive parts, buckets, electronic & electrical housing, blow molding flacons and barrels, pipe and sheet extrusion as well as film production.

The described blending apparatus for immiscible thermoplastic waste materials may be used in a recycling installation comprising a waste preparation section, upstream of the rotary blending apparatus, as well as an injection die unit downstream of the blending machine, specifically configured to receive the hot blended hybrid material of the blending machine and to transform said recycled blended material into granulates of desired dimensions, characterized in that the installation further comprises a gear pump, located between said blending apparatus and said injection die unit, capable to shorten the transfer time of the hot hybrid material from the blending apparatus to the injection die unit. (do we ant this mention at this stage, is the Blendymer/Gear pump mechanism subject to a separate patent?)

### Brief Description of the Drawings

In the following, the invention will be described in more detail with reference to drawings, of which
Fig. 1 is a block diagram of the lay- lout of a recycling installation including a blending machine for non immiscible thermoplastic materials of different types, according to the present invention.
Fig. 2 is a prior art blending machine, useful to implement the present invention.
Fig. 3 is a cross sectional view of the walls of a generally cylindrical blending chamber showing the cooling channels and the injection nozzle for injecting cooling fluid into the blending chamber, as well as the temperature sensors according to the invention.

### Detailed Description of the invention

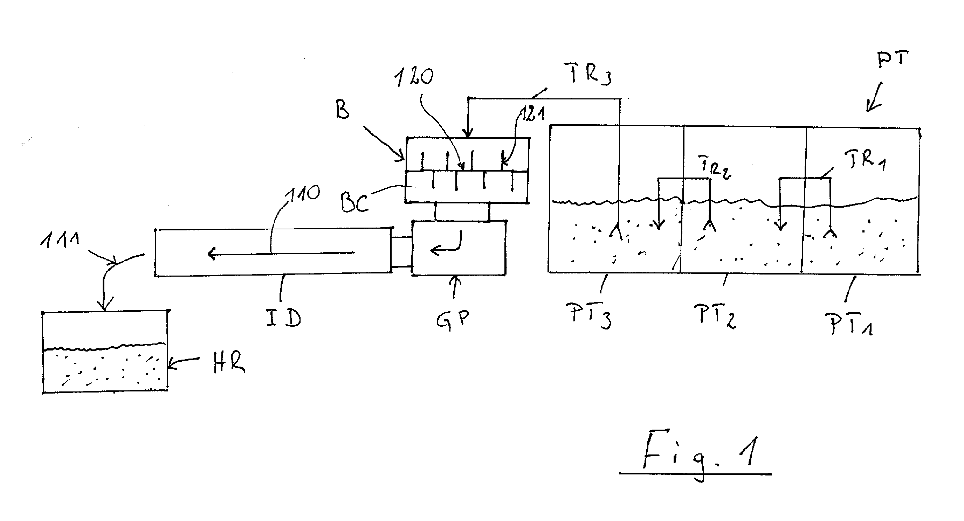

Fig. 1 is a grossly simplified general outlay of a waste plastic recycling installation including a blending apparatus B for the treatment of a mixture of thermoplastic, immiscible plastic waste by using a process according to the invention.

The illustrated recycling installation includes a pretreatment section PT, which comprises several subsections PT1, PT2 and PT3, but which in reality may comprise any desired number of subsections according to the nature of the waste material delivered to the installation.

Again in grossly simplified manner, transfer units TR1, TR2 and TR3, represented by arrows only, illustrate the transfer of the waste material from one subsection to the next, respectively to the blending apparatus B.

The various subsections may comprise treatment units for example for washing and/or drying the delivered material, for sorting out non desired components, such as metals, textiles, paper or the like, mixing stations for blending different plastic waste materials and/or for adding adjuvants, grinders and others, arbitrarily only three of these possibilities have been represented in Fig. 1 to illustrate the principle only.

Likewise, the transfer units TR1 etc. may be incorporated by identical or different devices, which simply have the task to transfer the waste material from one pretreatment substation to the next, and finally to the blending apparatus B.

Alternatively, in some instances, the pretreatment section PT may be comprised of one pretreatment subsection only, in which all necessary pretreatment operations are carried out.

Transfer unit TR3 finally charges the pretreated waste material into the blending apparatus B, which comprises a cylindrical blending chamber, in which a central shaft 20, carrying stirring blades 21 is driven to rotate at a speed of minimum 500 and upto 6,000 rounds per minute, so as to simultaneously mix and friction-heat the waste material.

In a manner known from the discussed prior art, the rotation of the central shaft 20 is stopped when the setting in of the melting process is indicated by a steep rise of the viscosity of the waste material, which translate into a similar steep rise of the energy necessary for driving the central shaft, whereby this moment, may be determined automatically, by monitoring the energy consumption of the driving motor, or its torque.

When this moment is attained, a non-illustrated discharge port of the blending chamber BC is opened, and the viscous hot blended material is drawn out into by a gear pump GP, which further delivers the material under pressure into an injection die ID, which the material traverses at 10, at the end of which the finalized blended of hybrid recycled new plastic material is presented at 11 and collected in a hybrid collection recipient HR.

The typical blending time or operation time of blending apparatus B is minimum 15 sec and max 60 sec, whereas the waste material under treatment stays only a short part of that at a temperature, at which degradation of the material starts to set in.

To this period must be added the time, that the materials runs through the gear pump and the injection die for a period sufficient to be extrudable.

Typically, the total time, that the material stays at a temperature, which may give rise to degradation, is not longer than 2 to 15 sec.

Various assisting measures may be taken to keep this time as short as possible, one of them being the injection of an inert gas into the blending chamber to create pressure therein, which helps to rapidly discharge the material after the opening of the discharge port. This measure, additionally has another advantage, which is the elimination of gases, which evolve from the heated materials during the blending treatment. Increasing the pressure in the blending chamber helps to eliminate these gases through the non-sealed joints of the blending apparatus, so that the finalized material entraps less microscopic gas bubbles and thereby increases the quality of the recycled product. (i believe that we could make this an additional or seperate claim as this COULD replace the degassing in the extruder depending on the input material, basically one simulates the extrusion degassing which needs maximum surface renewal and venting point, first atmospheric and secondly under vacuum in order to effectively degass, degassing in the blendymer would be the same only we would accelerate the process, first we have maximum surface renewal, the blades continuousely renew the surface and the injection of inhert gas will create a vacuum and by opening the discharge valve the gasses will be sucked out.

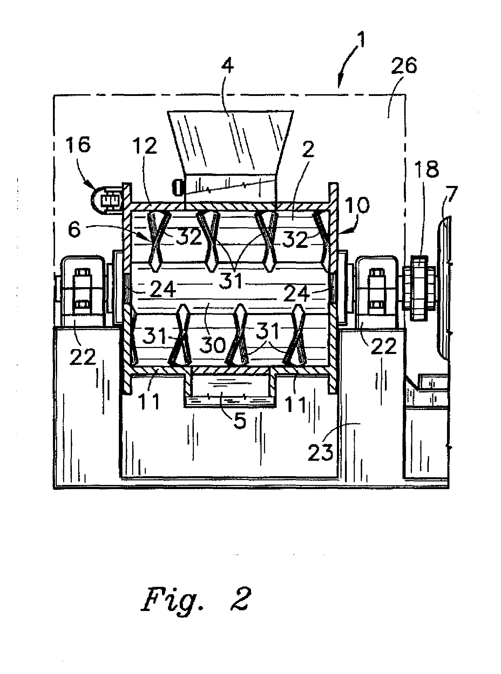

Turning now to Fig. 2, there is illustrated a conventional blending apparatus 1 of the present applicant, which constitutes the historical basis for the present blending apparatus according to the invention.

In Fig.2 blending apparatus 1 comprises a cylindrical chamber 2 with a horiuontal axis, provided with a feeding hopper4 placed in an upper position and adischarge well 5. A rotor 6, mounted coaxially inside the chamber 2, is operated by means of an electric motor 7. The walls of the chamber 2 consist of ab assembly 10 formed by uniting two semicylindrical shells 11 and 12, assembled together by means of a hinge along one lateral edge and a safety closing device is disposed along the opposite edge.

The upper shell 12 is connected to a pneumatic device 16 of a type known per se which makes possible its opening by pivoting around the hinge. The driving motion of the rotor 6 by the motor 7 is transmitted by means of a pneumatically controlled clutch 18. The rotation of rotor 6 can be interrupted at will by means of a breaking device 21 also pneumatically controlled.

The rotor 6 is supported at each of its ends by a bearing 22, fastened on a pillar 23. A thread joint 24 makes it possible to pass each end of the shaft of the rotor 6 tightly through the wall of the chamber 2.

Rotor 6 comprises an axial shaft 30 as well as, radially extending therefrom, blades 31 and 32.

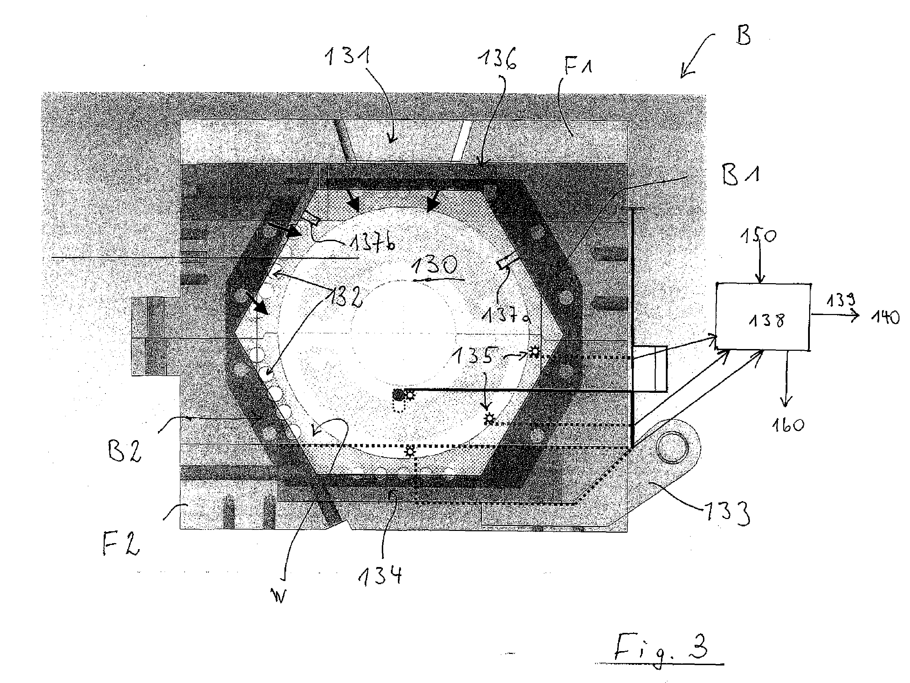

Fig. 3 is a cross sectional view of the blending apparatus according to the present invention, the basic mechanical conception of which being similat to the prior art apparatus of Fig. 2.

The blending apparatus B of Fig. 3 comprises a hexagonal body part formed by two half cylindrical half shelles B1 and B2, which are held between upper and lower end flanges F1 and F2 on each of their ends.

Once the two half shells are closed by means similar to the hinge and closure of the apparatus of Fig. 2, they form a full cylindrical blending chamber 130 within them.

On top of the bending apparatus is provided a hopper 131, and a sliding door 136, which is conveniently closed by means of a non-illustrated, conventional mechanism. At the bottom of the blending apparatus is provided of pivoting door 134, that may be opened and closed by means of a mechanically, pneumatically or hydraulically driven conventional device via pivoting lever 133.

The inner siedes of the two doors 136 and 134 are shaped with a cylindrical portion that corresponds to the cylindrical chamber 30 when closed.

The walls constituting the cylindrical half shells B1 and B2 comprise axis-paralles borings 132 for the passage of cooling fluid. These borings are connected with each other at each end by means of manifolds, which are located roughly at the axial position of end flanges F1 and F2, and which permit to feed and discharge cooling fluid from the cooling channels 132.

Within these walls, as close as possible to the surface in contact with the blending chamber, are located temperature sensors 135, capable of producing signals indicative of the real temperature of the wasrte material under treatment during operation.

Two injection nozzles 137a and 137b project out of the walls of the blending chamber, capable of injection a cooling fluid, such as liquid or at least still cold nitrogen, as an inert gas, into the blending chamber.

These injection nozzles, if arranged on the cylindrical walls, must be provided of course at an axial position, where they do not hinder the rotation of the stirring blades, alternatively, they may be positioned on the radial end walls.

The temperature sensors may be sensitive to conductive heat at the surroundings of the chamber walls, or they may be radiation sensitive sensors, whereby in both cases, an empirical method may be applied, in order to allocate the measured values to the real temperature of the hot plastic mass. Look-up tables may be used for this allocation.

Fig. 3 does not illustrate in detail, how the regulation of the cooling power of the cooling liquid is carried out, as conventional means such as throttle valves or the like may be used in order to influence the cooling power of the cooling fluid.

In order to maximize the cooling effect of the cooling liquid circulating within the cooling channels 132, it can be advantageous, to arrange for a turbulant flow characteistic of the cooling liquid within the channels.

This may be achieved, by inserting metal bands, of a cross dimension similar to the cross section of the cooling channels, which metal bands are twisted around their longitudinal axis at one or more axial positions.

These twists of the metal bands create turbulations in the flowing fluid, and may be located at desired axial positions, so as to create a cooling profile, that can axially vary along the cylinder axis direction of the blending chamber.

With this blending apparatus it is possible to mix and friction-heat plastic waste material in the traditional way, and further provide for an exact control of the temperature of the hot plastic mass under treatment, and thereby it is possible, to exploit the possibility of creating a sufficiently long or higher shearing of the soft plastic domains of different but uniform composition, in order to allow to decrease the volumes of these domains and thereby obtain a dedgree of mixing, which is as intimate as possible, while staying under the temperature, at which degradation of the themoplastic material sets in, or reaches a significant amount.

As described above, the important aspect of the invention is to reach and maintain temperature conditions toward the end of the mixing period, wherein shearing of the plastic material may continue or increase without fearing to degrade the material, in view of altering properties and/or create optimal homogenization further recycling posibilities.

This is is achived by operating the blending apparatus according to the invention in a way, where the exact parameters of final temperature, temperature ramp during the friction.heating phase, and duration or increase of continued shearing after reaching the point just beneath a critical temperature, are determined empirically by a trial and error method as claimed in claim 9.

Here, the basic mixing and heating process is carried out and the obtained material tested, until optimized parameters have been determined for operating the blending apparatus in view of optimizing the quality/number of possible recycling loops ratio.

The invention has been described above with reference to an embodiment thereof, however, it should be understood, that the scope of this invention is limited to any illustrated details, which are non essential in order to achive the defined objective.

## Claims

1. Rotary waste plastic blending apparatus (B) including a blending chamber (BC), defined by chamber walls (W), and a rotor shaft (120) rotationally mounted within said blending chamber (BC), said rotor shaft (120) carrying an appropriate number of stirring blades (121), extending radially away from said rotor shaft (120), said rotor shaft and stirring blades being configured such as to mix and friction-heat waste plastic material, chargeable into said blending chamber (BC), upon rotation of said rotor shaft within said blending chamber, said blending apparatus further comprising control means (138) capable of controlling rotation of said rotor shaft, and further including means (150) to measure at least one of the electrical energy consumed by a motor to rotate the shaft at a target rotational speed and a torque of said motor, and terminating the rotation of the rotor shaft if either one of the measured parameters of energy consumption and torque suddenly increases and/or reaches a predetermined value,
**characterized in that**
temperature measuring means (135) are provided, which are configured such as to be capable to measure, during rotation of the rotor shaft (120), the temperature of the waste plastic material charged into said blending chamber,
at least one of said chamber walls (W), said rotor shaft (120) and said stirring blades (121) include cooling channels (132), said control means (138) including temperature control means, capable of controlling, on the basis of measurements by said temperature measuring means (135), the amount and/or the temperature of cooling fluid injected into said cooling channels (132), said control means being configured such as to keep the temperature and/or the temperature ramp of the charged waste plastic material within a desired range of values.

2. The rotary waste plastic blending apparatus (B) of claim 1, **characterized in that** it further comprises at least one injection device (137a, 137b) for a cooling fluid, capable of injecting cooling fluid into said blending chamber (B) during rotation of said rotor shaft. said control means being capable of regulating at least one of amount, duration, frequency and fluid pressure of the injected cooling fluid.

3. The rotary waste plastic blending apparatus (B) of claim 2, **characterized in that** the injected cooling fluid is a cooled inert gas, such as liquid nitrogen.

4. The rotary waste plastic blending apparatus (B) of any one of the preceding claims, **characterized in that** said control means (138) is capable to regulate the cooling by means of said cooling channels (132) and/or by means of injection of a cooling fluid into said blending chamber (BC) such, that the temperature of the charged waste plastic material is kept at or beneath a desired value.

5. The rotary waste plastic blending apparatus (B) of any one of the preceding claims, **characterized in that** said blending chamber has substantially cylindrical shape, said rotor shaft being arranged within said cylindrical blending chamber in coaxial configuration, and said cooling channels comprise cylindrical borings (132) which are arranged in parallel relationship with said shaft (120) within walls (W) of said cylindrical blending chamber.

6. The rotary waste plastic blending apparatus of claim 5, **characterized in that**, said turbulence-creating objects are located within said cylindrical borings (132).

7. Method of producing a hybrid plastic material by blending together at least two immiscible thermoplastic waste plastic materials, comprising the steps of:
(a) mixing and heating granulated thermoplastic waste plastic material of at least two different types in a rotary blending machine provided with rotary stirring blades up to melting temperature,
(b) controlling the temperature of the granulated thermoplastic material during mixing and friction-heating in order to control its temperature to be kept at a value below a predetermined value, while permitting to continue and/or increase shearing of particles of the thermoplastic waste material for a desired period of time.

8. The method of claim 7, wherein said temperature control is carried out by controlling the amount and/or temperature of cooling fluid injected into said cooling channels of an apparatus of claim 1, and/or into said blending chamber by means of the injection devices of an apparatus of claim 2

9. The method of claim 7 or 8, further comprising a step of optimizing the physical properties of the resulting hybrid plastic material, said step comprising:
(c) carrying out steps (a) and (b) of the method of any one of claims 7 and 8,
(d) discharging the thus processed material to form samples of the hybrid plastic material,
(e) measuring the desired physical property of the sample material,
(f) changing the predetermined value of the temperature and/or of the mixing duration oft he waste plastic material charged into the blending chamber,
(g) repeating steps (c) to (f) until optimal values for temperature and mixing duration have been determined resulting in desired parameters of the produced hybrid plastic material, and
(h) continuing to carry out the method of claims 7 or 8 on the basis of the optimized values determined in step (g).

10. A recycled hybrid plastic material, produced by blending at least two kinds of immiscible thermoplastic materials in a blending apparatus (B) according to any one of claims I through 6, **characterized in that** it comprises an intimate mixture of microscopic regions of the initial materials, said microscopic regions having a size approaching the molecular size of the individual recycled materials.

11. The recycled hybrid plastic material of claim 10, **characterized in that** it has been obtained with the use of the blending apparatus of any one of claims 1 to 6.

12. The recycled hybrid plastic material of claim 10, **characterized in that** it has been obtained according to the method of claims 7 or 8.

13. Use of a recycled hybrid plastic material according to claim 10 for the production of transport pallets.

14. Waste plastic material recycling installation including a rotary waste plastic blending apparatus (B) according to any one of claims 1-6, comprising a waste preparation section(PT), upstream of the rotary blending apparatus (B), as well as an injection die unit (ID) downstream of the blending machine, specifically configured to receive the hot blended hybrid material of the blending machine and to transform said recycled blended material into granulates of desired dimensions, **characterized in that** the installation further comprises a gear pump (GP), located between said blending apparatus (B) and said injection die unit (ID), capable to shorten the transfer time of the hot hybrid material from the blending apparatus to the injection die unit.
